(19) Europäisches Patentamt
European Patent Office
Office européen des brevets

(11) Veröffentlichungsnummer: **0 064 752**
**B1**

(12) # EUROPÄISCHE PATENTSCHRIFT

(45) Veröffentlichungstag der Patentschrift: **08.01.86**

(21) Anmeldenummer: **82104012.8**

(22) Anmeldetag: **08.05.82**

(51) Int. Cl.[4]: **C 08 G 79/02,** C 07 F 9/65, C 08 K 5/49, C 08 L 101/00, C 08 L 23/02

(54) **Durch Piperidylgruppen substituierte Phosphazene, Verfahren zu ihrer Herstellung, ihre Verwendung als Stabilisatoren und die mit ihnen stabilisierten Polymermassen.**

(30) Priorität: **13.05.81 DE 3118962**

(43) Veröffentlichungstag der Anmeldung: **17.11.82 Patentblatt 82/46**

(45) Bekanntmachung des Hinweises auf die Patenterteilung: **08.01.86 Patentblatt 86/2**

(84) Benannte Vertragsstaaten: **CH DE FR GB LI NL**

(56) Entgegenhaltungen:
**DE - A - 2 636 144**
**DE - A - 2 719 131**
**US - A - 3 844 983**

(73) Patentinhaber: **HOECHST AKTIENGESELLSCHAFT, Postfach 80 03 20, D-6230 Frankfurt am Main 80 (DE)**

(72) Erfinder: **Wiezer, Hartmut, Dr., Am Stocket 18, D-8901 Lützelburg (DE)**

EP 0 064 752 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Aus der Literatur sind zahlreiche Polyalkylpiperidingruppen enthaltende Verbindungen bekannt, welche als Lichtschutzmittel für organische Polymerisate vorgeschlagen worden sind. So beschreibt z.B. die DE-OS 2 719 131 polymere Polyalkylpiperidinverbindungen, die jedoch vor allem in ihrer stabilisierenden Wirkung völlig unzureichend sind. Die DE-PS 2 636 144 betrifft polymere Lichtschutzmittel auf Triazinbasis, die zwar zu den besten des derzeitigen Standes der Technik zählen, jedoch besonders im Hinblick auf die Fettmigration nicht befriedigen, was sich in ihrer sehr guten Löslichkeit in Heptan zeigt.

Stabilisatoren mit definiertem hohen Molekulargewicht sind z.B. aus der DE-PS 2 636 130 bekannt. Aber auch diese Produkte weisen Mängel auf, da sie ebenfalls zu gut in Heptan löslich sind und daraus auf eine hohe Fettmigration zu schliessen ist.

Der vorliegenden Erfindung lag nun die Aufgabe zugrunde, Verbindungen mit definiertem, hohen Molekulargewicht zu finden, die sich von den bekannten Stabilisatoren, insbesondere bezüglich der Fettmigration und der Flüchtigkeit, positiv abheben.

Es wurde gefunden, dass diese Forderungen von neuen, Piperidingruppen tragenden, polymeren Phosphazenen weitestgehend erfüllt werden.

Die neuen Verbindungen entsprechen der allgemeinen Formel (I)

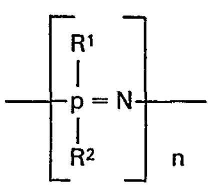

(I),

in welcher

n eine ganze Zahl von 3 bis 100, vorzugsweise von 3 bis 25 und insbesondere 3 bis 10 ist, wobei, wenn n eine ganze Zahl von 3 bis 6 darstellt, die Struktureinheiten der Formel (I) vorzugsweise cyclisch angeordnet sind und dann Ringe mit 3 oder 4, vorzugsweise 3 Phosphazeneinheiten der Formel (I) bevorzugt werden.

$R^1$ und $R^2$ sind gleich oder verschieden und sollen symbolisieren, dass die Phosphazene durch gleiche Reste, oder statisch im Molekül verteilte unterschiedliche Substituenten substituiert sind. Die Reste $R^1$ und $R^2$ stehen für Gruppen der Formeln (II), (III) oder (IV), vorzugsweise (II) oder (IV) und insbesondere (IV), oder auch neben diesen Gruppen für Halogen, vorzugsweise Chlor.

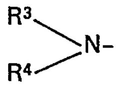

(II),

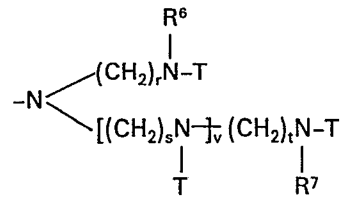

(III)

$-O-R^5$ (IV)

In Formel (II) sind

$R^3$ und $R^4$ gleich oder verschieden und haben die Bedeutung von Wasserstoff, von $C_1$- bis $C_{18}$-, vorzugsweise $C_1$- bis $C_{12}$- und insbesondere $C_1$- bis $C_6$-Alkyl, von $C_5$- bis $C_{12}$-Cycloalkyl, von Phenyl, das durch Cl, $CH_3O$- oder $C_1$- bis $C_4$-Alkyl substituiert sein kann, oder von $C_7$- bis $C_9$-Phenylalkyl oder stehen für eine Gruppe der Formel (V)

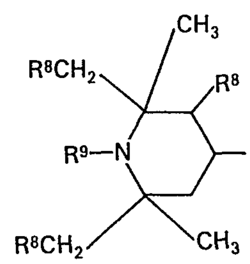

(V),

mit

$R^8$ = Wasserstoff oder Methyl, vorzugsweise Wasserstoff und

$R^9$ = Wasserstoff, $C_1$- bis $C_4$-Alkyl, das durch bis zu zwei OH-Gruppen substituiert sein kann, 2,3-Epoxipropyl, Allyl oder Benzyl, vorzugsweise jedoch Wasserstoff.

$R^3$ hat zusätzlich die Bedeutung von $C_3$- bis $C_{21}$-Alkoxialkyl, vorzugsweise $C_1$- bis $C_{18}$-Alkoxipropyl und insbesondere $C_1$- oder $C_2$- Alkoxipropyl, und

$R^3$ und $R^4$ können auch zusammen mit dem sie bindenden N-Atom für einen Pyrrolidinring oder für einen unsubstituierten oder durch bis zu vier $C_1$- bis $C_4$-Alkylgruppen, vorzugsweise Methylgruppen substituierten Piperidin-, Morpholin- oder Hexamethyleniminring stehen.

In Formel (III) haben

r, s und t die Bedeutung von gleichen oder unterschiedlichen ganzen Zahlen von 2 bis 6, vorzugsweise 2 oder 3, stellt

v eine ganze Zahl von 0 bis 3, vorzugsweise 0 oder 1 und insbesondere 0 dar und stehen

$R^6$ und $R^7$ für gleiche oder verschiedene Reste $R^5$, vorzugsweise für Wasserstoff oder für eine Gruppe der Formel (V) und insbesondere für Wasserstoff, und hat

T die Bedeutung einer Gruppe der Formel (VI)

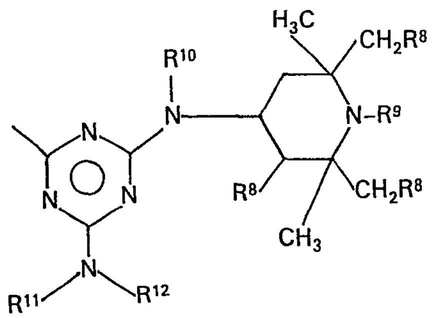

(VI),

worin $R^8$ und $R^9$ die oben angegebenen Bedeutungen haben,

$R^{10}$ und $R^{11}$ gleiche oder verschiedene Reste mit der Bedeutung von $R^3$ sind und

$R^{12}$ ein Rest mit der Bedeutung von $R^4$ ist.

In Formel (IV) stellt

$R^5$ einen Rest $R^4$ oder eine Gruppe der Formel (VII) oder (VIII) dar

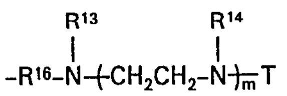

(VII)

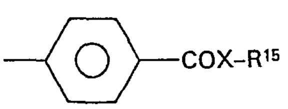

(VIII)

wobei X = 0 oder $NR^3$ ist, mit $R^3$ wie oben angegeben, $R^{15}$ = $CH_3$, $C_2H_5$ oder eine Gruppe der Formel (V),

m = 0 oder 1, vorzugsweise 0,

T = ein Rest der Formel (VI),

$R^{16}$ = $C_2$- bis $C_6$-Alkylen, bei m = 1 vorzugsweise Ethylen,

$R^{13}$ = ein Rest $R^4$, vorzugsweise Wasserstoff, und bei m = 1 Wasserstoff oder T, und mit

$R^{14}$ = ein Rest $R^4$, vorzugsweise Wasserstoff.

In Formel (I) muss die Gruppe der Formel (V) mindestens einmal, vorzugsweise jedoch mehrmals und insbesondere pro P=N-Einheit mindestens einmal enthalten sein.

Die neuen Piperidylgruppen enthaltenden Lichtschutzmittel auf Basis von Phosphazenen zeigen die oben angegebenen Nachteile nicht. Sie sind bei niedriger Flüchtigkeit und Heptanschwerlöslichkeit ausgezeichnet wirksam, zeigen eine hohe Migrationsfestigkeit gegen das Auswaschen mit Wasser, lassen wegen ihrer Heptanschwerlöslichkeit auf eine geringe Fettmigration schliessen und sind ausserordentlich thermostabil. Obwohl man eine gewisse Hydrolyseanfälligkeit hätte befürchten müssen, ist dies nicht der Fall. Ein weiterer Vorteil ist bei Einsatz der besonders bevorzugten cyclischen Phosphazene darin zu sehen, dass die Verbindungen die Tendenz haben, bei hohen Temperaturen von ca. 300°C, wie sie bei der Faser- und Folienherstellung aus Polyolefinen vorkommen, in höhermolekulare Produkte überzugehen. Dies wirkt sich besonders vorteilhaft bezüglich der Flüchtigkeit aus.

Die erfindungsgemässen Produkte werden durch Umsetzen von oligomeren oder polymeren Halogenphosphazenen der Formel (Ia)

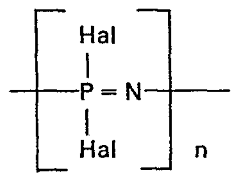

(Ia),

in welcher Hal = Fluor, Chlor, Brom oder Jod, insbesondere jedoch Chlor, ist und n die oben angegebene Bedeutung hat, mit Verbindungen der durch Wasserstoff abgesättigten Formeln (II) bis (IV) erhalten. Sind die eingesetzten Produkte solche der Formeln H-(II) oder H-(III), d.h. Amine, so kann man als Halogenwasserstoffakzeptoren dieselben im Überschuss zugeben, vorteilhafter ist es jedoch, zu diesem Zweck zusätzliche Basen wie Triethylamin, Pyridin, Alkalimetallhydroxide oder -carbonate zu verwenden. Geht man von den aus Formel (IV) abgeleiteten Alkoholen $HOR^5$ aus, so kommen diese bevorzugt in Form ihrer Alkalisalze zum Einsatz.

Man arbeitet in inerten organischen Lösungsmitteln wie Dioxan, Tetrahydrofuran, Aceton, Ether, Benzol, Toluol, Xylol, Mesitylen oder Gemischen derselben und wählt eine Reaktionstemperatur zwischen 20 und 200°C. Vorzugsweise wird die Umsetzung bei 80 bis 200 und insbesondere bei 110 bis 200°C durchgeführt.

Wenn man äquivalente Mengen von Verbindung (Ia) und Produkten der Formeln H-(II), H-(III) oder H-(IV) einsetzt, werden in einem einzigen Verfahrensschritt sämtliche Halogenatome der Halogenphosphazene substituiert. Bei Verwendung von Mischungen lassen sich natürlich auch unterschiedliche Reste (II), (III) oder (IV) einführen, allerdings nicht gezielt. Setzt man weniger als die äquivalente, jedoch mindestens die äquimolare Menge H-(II), H-(III) oder H-(IV) ein, so werden noch Halogenatome tragende Teilsubstitutionsprodukte erhalten, die man dann mit der, bezogen auf Resthalogen, äquivalenten Menge einer weiteren, vorzugsweise sterisch nicht anspruchsvollen Verbindung der Formel H-(II), H-(III) oder H-(IV) umsetzen kann. Nach dieser Verfahrensvariante ist auch die gezielte Einführung von mehr als zwei unterschiedlichen Resten möglich.

Die als Ausgangsmaterial dienenden Halogenphosphazene, welche auch unter der Bezeichnung Halogenazaphosphorine bekannt sind, werden nach bekannten Verfahren aus Phosphorhalogeniden und Ammoniumhalogeniden erhalten (vgl. Ullmann, 4. Auflage, Bd. 18, Seite 373). Produkte mit cyclischer Struktur [$(PNCl_2)_3$ und $(PNCl_2)_4$] bilden sich z.B. aus $PCl_5$ und $NH_4Cl$ durch Polymerisation des intermediär entstehenden Phosphornitriddichlorids. Kurzkettige lineare Halogenphosphazene erhält man aus $PCl_3+NH_4Cl+Cl_2$ bei 140°C, und aus cyclischen Haloghenphosphazenen kann man durch Erhitzen auf 250 bis 300°C langkettige, lineare Polymerisate herstellen. Für den erfindungsgemässen Einsatz sind sowohl lineare als auch cyclische Halogenphosphazene aus 3 bis 100 Phosphornitriddihalogenid-Struktureinheiten geeignet, bevorzugt die cyclischen, aus 3 oder 4, insbesondere 3 Monomereinheiten bestehenden. Im allgemeinen verwendet man die Chloride.

Beispiele für Ausgangsverbindungen der durch H abgesättigten Formel (II) sind:

1. 2,2,6,6-Tetramethyl-4-aminopiperidin
2. 2,2,6,6-Tetramethyl-4-butylaminopiperidin
3. 2,2,6,6-Tetramethyl-4-octadecylaminopiperidin
4. 2,2,6,6-Tetramethyl-4-(3-methoxi)-porpylaminopiperidin
5. 2,2,6,6-Tetramethyl-4-(3-dimethylamino)-propylaminopiperidin
6. Ammoniak
7. Methylamin
8. Butylamin
9. Hexylamin
10. Dodecylamin
11. 2-Ethyl-hexylamin
12. Octadecylamin
13. Cyclohexylamin
14. Benzylamin
15. 3-Methoxypropylamin
16. 3-Octadecyloxipropylamin
17. 3-Dimethylaminopropylamin
18. Diethylamin
19. Dibutylamin
20. Dicyclohexylamin
21. Dioctadecylamin

Beispiele für Ausgangsverbindungen der durch H abgesättigten Formel (III) sind:

22. 1,9-Bis-[2,4-bis-‹N-(2,2,6,6-tetramethyl-4-piperidyl)-3-methoxipropylamino›-1,3,5-triazin-6-yl]-1,5,9-triazanonan
23. 1,7-Bis-[2,4-bis-‹N-(2,2,6,6-tetramethyl-4-piperidyl)-3-methoxipropylamino›-1,3,5-triazin-6-yl]-1,4,7-triazaheptan
24. 1,5,12-Tris-[2,4-bis-‹N-(2,2,6,6-tetramethyl-4-piperidyl)-3-methoxipropylamino›-1,3,5-triazin-6-yl]-1,5,8,12-tetraazadodecan

Beispiele für Ausgangsverbindungen der durch H abgesättigten Formel (IV) sind:

25. 2,2,6,6-Tetramethylpiperidinol-4
26. Methanol
27. Butanol
28. Octadecylalkohol
29. 2-(3-Hydroxipropylamino)-4,6-bis-[N-(2,2,6,6-tetramethyl-4-piperidyl)-amino]-1,3,5-triazin
30. 2-(3-Hydroxipropylamino)-4,6-bis-[N-(2,2,6,6-tetramethyl-4-piperidyl)-butylamino]-1,3,5-triazin
31. 2-(3-Hydroxipropylamino)-4,6-bis-[N-(2,2,6,6-tetramethyl-4-piperidyl)-3-methoxipropylamino]-1,3,5-triazin
32. 2-(6-Hydroxihexylamino)-4,6-bis-[N-(2,2,6,6-tetramethyl-4-piperidyl)-3-methoxipropylamino]-1,3,5-triazin
33. 2-(3-Hydroxipropylamino)-4-octadecylamino-6-[N-(2,2,6,6-tetramethyl-4-piperidyl)-3-methoxipropylamino]-1,3,5-triazin
34. 2-(2-Hydroxiethylamino)-4,6-bis-[N-(2,2,6,6-tetramethyl-4-piperidyl)-3-methoxipropylamino]-1,3,5-triazin
35. 2-(6-Hydroxihexylamino)-4-[N-(2,2,6,6-tetramethyl-4-piperidyl)-3-dimethylaminopropylamino]-6-[N-(2,2,6,6-tetramethyl-4-piperidyl)-3-methoxipropylamino]-1,3,5-triazin
36. 2-(3-Hydroxipropylamino)-4-butylamino-6-[N-(2,2,6,6-tetramethyl-4-piperidyl)-3-methoxipropylamino]-1,3,5-triazin
37. 2-(2-Hydroxiethylamino)-4-(3-octadecyloxipropylamino)-6-[N-(2,2,6,6-tetramethyl-4-piperidyl)-3-methoxipropylamino]-1,3,5-triazin
38. 2-(3-Hydroxipropylamino)-4-(diethylamino)-6-[N-(2,2,6,6-tetramethyl-4-piperidyl)-butylamino]-1,3,5-triazin
39. 2-(6-Hydroxihexylamino)-4-benzylamino-6-[N-(2,2,6,6-tetramethyl-4-piperidyl)-3-methoxipropylamino]-1,3,5-triazin
40. 2-(3-Hydroxipropylamino)-4,6-bis-[N-(2,2,6,6-tetramethyl-4-piperidyl)-octadecylamino]-1,3,5-triazin
41. 2-(3-Hydroxipropylamino)-4,6-bis-{1,9-bis-[2,4-bis-‹N-(2,2,6,6-tetramethyl-4-piperidyl)-3-methoxipropylamino›-1,3,5-triazin-6-yl]-1,5,9-triazanonyl-5}-1,3,5-triazin

Die neuen Verbindungen sind – wie bereits ausgeführt – hervorragend zum Stabilisieren von Kunststoffen gegen deren photooxidativen Abbau, d.h. die Schädigung durch Einwirkung von Sauerstoff, Wärme und Licht, geeignet.

Beispiele für solche Kunststoffe sind:

Polymere, die sich von einfach oder doppelt ungesättigten Kohlenwasserstoffen ableiten, z.B. Polyolefine wie Polyethylen, das gegebenenfalls vernetzt sein kann, Polypropylen, Polybuten-1, Polyisobuten, Polymethylbuten-1, Polymethylpenten-1, Polyisopren, Polybutadien, Polystyrol, Copolymere der den genannten Homopolymeren zugrundeliegenden Monomeren, wie Ethylen-Propylen-Copolymere, Propylen-Buten-1-Copolymere, Propylen-Isobuten-Copolymere, Styrol-Butadien-Copolymere sowie Terpolymere von Ethylen und Propylen mit einem Dien, wie z.B. Hexadien, Dicyclopentadien oder Ethylidennorbornen; Mischungen der obengenannten Homopolymeren, wie beispielsweise Gemische von Polypropylen und Polyisobutylen oder von Butadien-Acrylnitril-Copolymerisat mit einem Styrol-Butadien-Copolymerisat.

Halogenhaltige Vinylpolymere, wie Polyvinylchlorid, Polyvinylidenchlorid, Polyvinylfluorid, Polychloropren und Chlorkautschuke, sowie Copolymere von Vinylchlorid und Vinylidenchlorid

untereinander und mit anderen olefinisch ungesättigten Monomeren.

Polymere, die sich von α,β-ungesättigten Säuren und deren Derivaten ableiten, wie Polyacrylate und Polymethacrylate, Polyacrylamide und Polyacrylnitril sowie deren Copolymere untereinander und mit anderen Vinylverbindungen, wie Acrylnitril-Butadien-Styrol-, Acrylnitril-Styrol- und Acrylnitril-Styrol-Acrylester-Copolymerisate.

Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin und deren Copolymere mit anderen Vinylverbindungen, wie Ethylen-Vinylacetat-Copolymere.

Homo- und Copolymere, die sich von Epoxiden ableiten, wie Polyethylenoxid oder die Polymerisate, die sich von Bisglycidylethern ableiten.

Polyacetale, wie Polyoximethylen und Polyoxiethylen sowie solche Polyoximethylene, die als Comonomeres Ethylenoxid enthalten.

Polyurethane und Polyharnstoffe

Polycarbonate

Polyamide und Copolyamide, die sich von Diaminen und Dicarbonsäuren und/oder Aminocarbonsäuren oder den entsprechenden Lactamen ableiten, wie Polyamid 6, Polyamid 6/6, Polyamid 6/10, Polyamid 11, Polyamid 12.

Polyester, die sich von Dicarbonsäuren und Dialkoholen und/oder von Hydroxicarbonsäuren oder den entsprechenden Lactonen ableiten, wie Polyethylenterephthalat, Polybutylenterephthalat, Poly-1,4-dimethylol-cyclohexanterephthalat.

Vernetzte Polymere, die sich von Aldehyden einerseits und Phenolen, Harnstoffen und Melaminen andererseits ableiten, wie Phenol-Formaldehyd-, Harnstoff-Formaldehyd- und Melamin-Formaldehydharze.

Die neuen Verbindungen lassen sich schliesslich auch als Stabilisatoren auf dem Harz- und Lacksektor einsetzen. Beispiele sind duroplastische und thermoplastische Acrylharze, welche für Autolackierungen verwendet werden, Acrylharzlacke, das sind die üblichen Einbrennlacke sowie ganz besonders Mischungen auf der Basis von heiss-vernetzbarem Acrylharz und Styrol sowie Lacke und Beschichtungen auf der Basis von Acryl/Melaminharz und Alkyd/Acryl/Melaminharz. Derartige Lacke können als weitere Zusatzstoffe andere übliche Lichtschutzmittel, phenolische Antioxidantien, Pigmente, Farbstoffe, Metalldesaktivatoren, etc. enthalten.

Von besonderer Bedeutung ist die Stabilisierung von Polyolefinen, Styrolpolymerisaten, Polyamiden, Poly-(meth)acrylaten und von Polyurethanen, für die sich die Verbindungen bevorzugt eignen. Beispiele hierfür sind Polyethylen hoher und niedriger Dichte, Polypropylen, Ethylen-Propylen-Copolymerisate, Polystyrol, Styrol-Butadien-Acrylnitril-Terpolymerisate; Mischungen von Polyolefinen oder von Styrolpolymerisaten sowie Polyurethane auf Polyether- oder Polyesterbasis.

Die neuen Stabilisatoren werden nach allgemein üblichen Methoden in die Polymermassen eingearbeitet. Die Einarbeitung kann beispielsweise durch Einmischen der Verbindungen und gegebenenfalls weiterer Additive in die Schmelze nach den in der Technik üblichen Methoden, vor oder während der Formgebung, oder auch durch Aufbringen der gelösten oder dispergierten Verbindungen auf das Polymere direkt oder Einmischen in eine Lösung, Suspension oder Emulsion desselben, gegebenenfalls unter nachträglichem Verdunstenlassen des Lösungsmittels, erfolgen. Die Mengen liegen bei 0,01 bis 5, vorzugsweise bei 0,05 bis 2,5 und insbesondere bei 0,1 bis 1,0 Ew.%, bezogen auf das zu stabilisierende Material. Die neuen Verbindungen können auch in Form eines Masterbatches, der diese Verbindungen beispielsweise in einer Konzentration von 1 bis 50, vorzugsweise 2,5 bis 20 Gew.% enthält, den zu stabilisierenden Kunststoffen zugesetzt werden.

Die durch den Zusatz der erfindungsgemässen Substanzen stabilisierten Kunststoffe können gegebenenfalls noch andere bekannte und übliche Zusätze, wie beispielsweise Antioxidantien auf Phenol- und Sulfidbasis, Metalldesaktivatoren und Lichtschutzmittel, Phosphitstabilisatoren, Metallverbindungen, Epoxistabilisatoren und mehrwertige Alkohole enthalten.

Beispiele für Antioxidantien sind sterisch gehinderte Phenole wie 2,6-Di-tert.-butyl-4-methylphenol, 4,4'-Butyliden-bis-(2,6-ditert.-butylphenol), 4,4'-Thio-bis-(2-tert.-butyl-5-methylphenol), 2,5-Di-tert.-butyl-4-hydroxianisol, 2,2-Bis-(3,5-di-tert.-butyl-2-hydroxibenzyl)-malonsäuredioctadecylester, 1,3,5-Tris-(3,5-di-tert.-butyl-4-hydroxibenzyl)-2,4,6-trimethylbenzol, 2,4,6-Tri-(3,5-di-tert.-butyl-4-hydroxibenzyl)-phenol, phenolische Triazinverbindungen wie 1,3,5-Tris-(3,5-di-tert.-butyl-4-hydroxibenzyl)-isocyanurat, Ester der β-(3,5-Di-tert.-butyl-4-hydroxiphenyl)-propionsäure mit z.B. Octadecanol, Pentaerythrit und Tris-hydroxiethyl-isocyanurat, Ester der 3,3-Bis-(3-tert.-butyl-4-hydroxiphenyl)-butansäure mit z.B. Ethylenglykol, Thiodipropionsäureestern mit Fettalkoholen, Ca- oder Ni-Salze des 3,5-Di-tert.-butyl-4-hydroxibenzylphosphorsäureethylesters, Dioctadecylsulfid und -disulfid.

Zu den UV-Absorbern und Lichtschutzmitteln gehören 2-(2'-Hydroxiphenyl)-benztriazole wie z.B. das 5-Chlor-3',5'-di-tert.-butyl- und 5-Chlor-3',5'-di-tert.-amyl-Derivat, 2-Hydroxibenzophenone wie z.B. das 4-Heptoxi- oder 4-Octoxi-Derivat, Salizylate wie Octylphenylsalizylat, Nickelkomplexe wie z.B. die mit 2,2'-Thio-bis-4-(1,1,3,3-tetramethylbutyl)-phenol und Butylamin oder anderen Aminen, Oxalsäurediamide und sterisch gehinderte Amine.

Als Phosphite sind aliphatische, aromatische oder aliphatisch-aromatische wie z.B. Trisnonylphenylphosphit, Tris-(2,4-di-tert.-butylphenyl)-phosphit, Tris-(2-tert.-butylphenyl)-phosphit

oder auch Ester des Pentaerythritphosphits zu nennen.

Unter als Stabilisatoren bekannten Metallverbindungen werden verstanden: Calcium-, Barium-, Strontium-, Zink-, Cadmium-, Magnesium-, Aluminium- und Bleiseifen aliphatischer Carbonsäuren oder Oxicarbonsäuren mit etwa 12 bis 32 C-Atomen, Salze der genannten Metalle mit aromatischen Carbonsäuren wie Benzoate oder Salizylate sowie (Alkyl-)Phenolate dieser Metalle, ferner Organozinnverbindungen wie z.B. Dialkylzinnthioglykolate und -carboxylate.

Bekannte Epoxistabilisatoren sind z.B. epoxidierte höhere Fettsäuren wie epoxidiertes Sojabohnenöl, Tallöl, Leinöl oder epoxidiertes Butyloleat sowie Epoxide langkettiger Olefine.

Mehrwertige Alkohole können beispielsweise Pentarythrit, Trimethylolpropan, Sorbit oder Mannit sein, d.h. bevorzugt Alkohole mit 5 oder 6 C-Atomen und 2 bis 6 OH-Gruppen.

Eine wirksame Stabilisatorkombination für Poly-$\alpha$-Olefine, wie z.B. Hoch-, Mittel- und Niederdruckpolymerisate von $C_2$- bis $C_4$-$\alpha$-Olefinen, insbesondere Polyethylen und Polypropylen oder von Copolymerisaten derartiger $\alpha$-Olefine besteht, bezogen auf 100 Gewichtsteile Polymer, beispielsweise aus 0,01 bis 5 Gewichtsteilen einer der erfindungsgemäss zu verwendenden Verbindungen, 0,05 bis 5 Gewichtsteilen eines phenolischen Stabilisators, gegebenenfalls 0,01 bis 5 Gewichtsteilen eines schwefelhaltigen Costabilisators sowie gegebenenfalls 0,01 bis 5 Gewichtsteilen einer basischen oder neutralen Metallseife, wie z.B. Calciumstearat oder Zinkstearat oder der entsprechenden Oxide sowie gegebenenfalls 0,01 bis 5 Gewichtsteilen eines bekannten UV-Stabilisators aus der Gruppe der Alkoxihydroxibenzophenone, 4-Hydroxiphenylbenzotriazole, Benzylidenmalonsäuremononitrilester oder der sog. Quenscher, wie z.B. Nickelchelate. Als sonstige übliche Zusätze sind z.B. Weichmacher, Gleitmittel, Emulgatoren, Füllstoffe wie z.B. Kreide, Talkum, Asbest, Pigmente, optische Aufheller, Flammschutzmittel und Antistatika anzusehen.

Die erfindungsgemäss stabilisierten Kunststoffe können in verschiedenster Form angewendet werden, z.B. als Folien, Fasern, Bändchen, Profile oder als Bindemittel für Lacke, Klebemittel oder Kitte.

In den folgenden Beispielen, welche der weiteren Erläuterung der Erfindung dienen, sind die eingesetzten einzelnen Ausgangsverbindungen durch Ziffern gekennzeichnet, die sich auf die Auflistung auf den Seiten 7 bis 9 beziehen. Die Verfahrensprodukte sind sämtlich Harze mit naturgemäss unscharfen Schmelzpunkten, so dass deren Angabe lediglich «ca.»-Werte sind. Die Angabe «Harz» bedeutet, dass es sich um ein Weichharz handelt.

Beispiel 1

In 100 ml abs. Mesitylen wurden 13,0 g (0,02 Mol) der Verbindung 32 mit 0,6 g (0,02 Mol) 80%igem NaH (in Paraffin) bis zur Beendigung der Wasserstoffentwicklung bei 150°C gerührt. Dann wurden 3,5 g (0,01 Mol) 2,2,4,4,6,6-Hexachlor-2,2,4,4,6,6-hexahydro-1,3,5-triaza-2,4,6-triphosphorin (IUPAC-Nomenklatur; nachfolgend als $(PNCl_2)_3$ bezeichnet) zugefügt, worauf man 15 Stunden bei 110°C rührte. Es wurde filtriert und das Filtrat i. Vak. eingeengt. Das verbleibende feste Harz zeigte einen Fp von 108 bis 117°C.

Analyse:

| | | | | |
|---|---|---|---|---|
| Gef.: | P 6,0 % | C 52,9 % | H 8,7 % | N 16,3 % |
| Ber.: | P 5,92% | C 53,44% | H 8,53% | N 16,93% |

Beispiele 2 bis 11

Es wurde wie in Beispiel 1 angegeben gearbeitet, jedoch bei 160°C Reaktionstemperatur.

| Beispiel Nr. | Ausgangsmaterial | | Reaktionszeit (Std.) | Verfahrensprod. Fp (°C) |
|---|---|---|---|---|
| | Verb.-Nr. (g = Mol) | $(PNCl_2)_3$ (g = Mol) | | |
| 2 | 31 (18,2 = 0,45) | 5,2 (0,015) | 16 | ~92 |
| 3 | 31 (12,1 = 0,02) | 1,7 (0,005) | 16 | ~70 |
| 4 | 31 (12,1 = 0,02) | 1,17 (1/300) | 30 | ~90 |
| 5 | 32 (12,9 = 0,02) | 1,17 (1/300) | 30 | ~80 |
| 6 | 29 (9,2 = 0,02) | 1,17 (1/300) | 16 | ~100 |
| 7 | 30 (11,5 = 0,02) | 1,17 (1/300) | 16 | ~150 |
| 8 | 38 (8,7 = 0,02)123456789-91à24 | 1,17 (1/300) | 24 | ~95 |
| 9 | 37 (13,8 = 0,02) | 1,17 (1/300) | 24 | Harz |
| 10 | 36 (9,0 = 0,02) | 1,17 (1/300) | 24 | ~120 |
| 11 | 42 (11,0 = 0,02) | 1,17 (1/300) | 30 | Harz |

Beispiel 12

Zu 30 ml abs. Xylol und 3,5 g (0,01 Mol) $(PNCl_2)_3$ wird eine Lösung aus 10 ml abs. Xylol und 6,9 g (0,03 Mol) der Verbindung 4 getropft. Nach 30 min fügt man 1,2 g (0,03 Mol) NaOH-Pulver zu und rührt 5 Stunden nach. Dann werden 6 g (~0,06 Mol) der Verbindung 15 zugegeben, worauf man 8 Stunden am Wasserabscheider kocht. Es wird filtriert und das Filtrat i. Vak. eingeengt.

Ausbeute: 10 g eines zähen Harzes

Analyse: Ber.: P 8,61%, gef.: P 8,6%

Beispiel 13

7,5 g (2/300 Mol) 2,2,4,4,6,6-Hexakis-4-carbethoxi-phenoxi]-2,2,4,4,6,6-hexahydro-1,3,5-triaza-2,4,6-phosphorin, welches aus $(PNCl_2)_3$ und der äquivalenten Menge 4-Hydroxi-benzoesäureethylester erhalten worden war, und 6,2 g (12/300 Mol) der Verbindung 1 werden unter schwachem Durchleiten von Stickstoff unter Rühren 8 Stunden bei 250°C gerührt. Anschliessend werden i. Vak. bei 120°C die flüchtigen Bestandteile entfernt. Es bleibt ein festes Harz. Fp ~220°C.

Beispiel 14

Man arbeitet wie in Beispiel 13 angegeben unter Einsatz von 4,0 g (0,004 Mol) des dort verwendeten Phosphorins und 11,0 g (0,02 Mol) der Verbindung 4 und erhält ein Harz vom Fp ~76°C.

Beispiel 15

Dieses Beispiel zeigt die Flüchtigkeit der neuen phosphorhaltigen Stabilisatoren im Vergleich zu einem Produkt des nächsten Standes der Technik.

Die Flüchtigkeiten wurden in einer Apparatur zur thermogravimetrischen Analyse bestimmt. Gleiche Mengen (500 mg) der erfindungsgemässen Verbindungen und der Vergleichssubstanz wurden dazu in Stickstoffatmosphäre mit einer Aufheizgeschwindigkeit von 2 K/min bis auf 300°C erhitzt und der Substanzverlust in $mg/cm^2$ Probenoberfläche gemessen. Die Ergebnisse zeigt nachstehende Tabelle:

| Stabilisator gem. Beispiel | Gewichtsverlust in $mg/cm^2$ beim Erreichen von ... °C | | | |
|---|---|---|---|---|
| | 220 | 260 | 300 | 10 min bei 300 °C |
| Vergleich*) | 0,32 | 1,11 | 9,48 | 58,46 |
| 6 | - | 1,26 | 3,79 | 6,95 |

*) Verbindung gemäss Beispiel 1 der DE-OS 2 719 131

Beispiel 16

In Polypropylen (®Hostalen PPU VP 1770 F der Hoechst AG) vom Schmelzindex MFI 190/5 = 1,9 g/10 min s. DIN 53 535 werden die unten angegebenen Rezepturbestandteile mittels eines Laborschnellmischers eingemischt. Die Mischung wird zu Granulat verarbeitet, worauf man das so stabilisierte Material in einem Laborextruder unter den üblichen Verarbeitungsbedingungen aufschmilzt und über eine Spinnpumpe mit Achtfachspinnkopf zu Monofilamenten verspinnt, welche anschliessend im Verhältnis 1:3 nachverstreckt, zu Garn von 40 dtex texturiert und zu Prüfgeweben verarbeitet werden.

100 Gew.-T. Polypropylen,
0,2 Gew.-T. Calciumstearat,
0,1 Gew.-T. 3,3-Bis-(3-tert.-butyl-4-hydroxiphenyl)-butansäureethylenglykolester,
0,1 Gew.-T. Dioctadecyldisulfid,
0,3 Gew.-T. des zu prüfenden erfindungsgemässen Stabilisators

Die Gewebeproben werden auf einen gelochten Karton so aufgespannt, dass eine freie Öffnung von ca. 15,5 mm Durchmesser bestehen bleibt. In dieser Form werden die Prüflinge in einem Xenotest X 1200-Gerät der Firma Original Hanau Quarzlampen GmbH unter Bestrahlung mit Wechsellicht künstlich bewittert. Die Strahlungsintensität wurde durch UV-Filter (Spezialfilterglas d = 1,7 mm) moduliert. Die Lichtbeständigkeit wurde nach DIN 53 387 (17 min Trockenperiode, 3 min beregnen, Schwarztafeltemperatur 45°C, relative Luftfeuchtigkeit während der Trockenperiode 70 bis 75%) geprüft.

In bestimmten Zeitabständen werden die Gewebe zentrisch mit einem Gewicht von 6 mm Durchmesser und einem Druck von 0,1 $N/mm^2$ belastet. Als Versagenstermin gilt das Durchbrechen des Gewichtes.

| Stabilisator nach Beispiel | Belichtungszeit in h |
|---|---|
| Polypropylen | < 280 |
| Vergleich*) | 1400 |
| 6 | >3000[1]) |

*) Verbindung gemäß Beispiel 1 der DE-OS 27 19 131

[1]) Gewicht noch nicht durchgebrochen

Beispiel 17

Das wie im vorhergehenden Beispiel hergestellte stabilisierte Granulat wird auf einer Labor-Folienblasanlage (Schneckendurchmesser 25 mm, Länge 20 D, Temperaturprogramm 200, 240, 250, 255°C) zu Blasfolien von ca. 70 µm Dicke verarbeitet. Die Folien werden im Xenotest X 1200-Gerät wie in Beisiel 16 beschrieben künstlich bewittert. Als Schädigungsmerkmal wird die Carbonylzahl in Anlehnung an DIN 63 383, Teil 2, bestimmt. (Diese wird für PP definiert als Verhältnis der Extinktionen bei 1715 $cm^{-1}$ und 1524 $cm^{-1}$).

| Stabilisator nach Beispiel | C = O-Zahl nach ... Stunden | | | |
|---|---|---|---|---|
| | 500 | 1000 | 2000 | 2500 |
| Polypropylen | >2 | – | – | – |
| Vergleich*) | | >2 | | |
| 6 | <0,1 | 0,1 | 0,3 | 0,5 |

*) Verbindung gemäss Beispiel 1 der DE-OS 2 719 131

## Patentansprüche

1. Durch Piperidylgruppen substituierte Phosphazene der allgemeinen Formel (I)

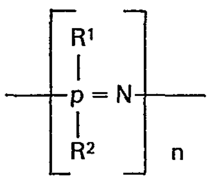

(I),

in welcher
n eine ganze Zahl von 3 bis 100 ist,
$R^1$ und $R^2$ gleich oder verschieden sind und für eine Gruppe der Formeln (II), (III) oder (IV)

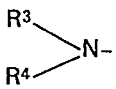

(II),

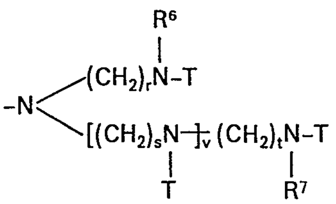

(III)

$-O-R^5$ (IV)

oder neben mindestens einer dieser Gruppen für Halogen stehen,
wobei in Formel (II)
$R^3$ und $R^4$ gleich oder verschieden sind und die Bedeutung von Wasserstoff, von $C_1$- bis $C_{18}$-Alkyl, von $C_5$- bis $C_{12}$-Cycloalkyl, von Phenyl, das durch Cl, $CH_3O$-, oder $C_1$- bis $C_4$-Alkyl substituiert sein kann, oder von $C_7$- bis $C_9$-Phenylalkyl haben, oder eine Gruppe der Formel (V)

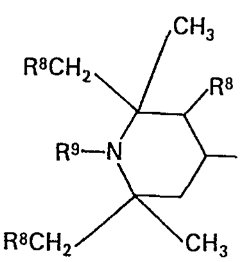

(V),

bedeuten, mit
$R^8$ = Wasserstoff oder Methyl und
$R^9$ = Wasserstoff, $C_1$- bis $C_4$-Alkyl, das durch bis zu zwei OH-Gruppen substituiert sein kann, 2,3-Epoxipropyl, Allyl oder Benzyl,
$R^3$ zusätzlich die Bedeutung von $C_3$- bis $C_{21}$-Alkoxialkyl hat oder auch
$R^3$ und $R^4$ zusammen mit dem sie bindenden N-Atom für einen Pyrrolidinring oder einen Piperidin-, Morpholin- oder Hexamethyleniminring, der auch durch bis zu vier $C_1$- bis $C_4$-Alkylgruppen substituiert sein kann, stehen,
wobei in Formel (III)
r, s und t gleiche oder unterschiedliche ganze Zahlen von 2 bis 6 sind,
v eine ganze Zahl von 0 bis 3 darstellt, und
$R^6$ und $R^7$ für gleiche oder verschiedene Reste $R^5$ oder für eine Gruppe der Formel (V) stehen und
T die Bedeutung einer Gruppe der Formel (VI)

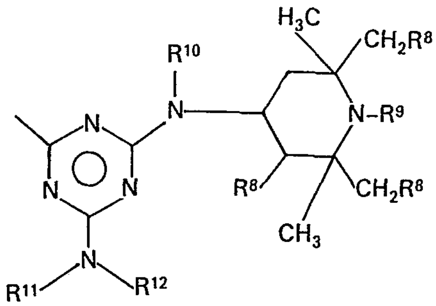

(VI),

hat,
worin $R^8$ und $R^9$ die oben angegebenen Bedeutungen haben,
$R^{10}$ und $R^{11}$ gleiche oder verschiedene Reste mit der Bedeutung von $R^3$ sind und
$R^{12}$ ein Rest mit der Bedeutung von $R^4$ ist, und
wobei in Formel (IV)
$R^5$ einen Rest $R^4$ oder eine Gruppe der Formeln (VII) oder (VIII) darstellt,

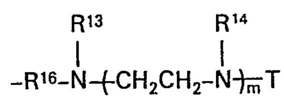

(VII)

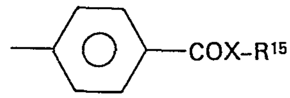

(VIII)

wobei X = O oder $NR^3$ ist,
mit $R^3$ wie oben angegeben und $R^{15} = CH_3$, $C_2H_5$ oder eine Gruppe der Formel (V),
m = null oder 1,
T = ein Rest der Formel (VI),
$R^{16}$ = $C_2$- bis $C_6$-Alkylen,
$R^{13}$ = ein Rest $R^4$ oder T und
$R^{14}$ = ein Rest $R^4$
und in Formel (I) mindestens eine Gruppe der Formel (V) enthalten sein muss.

2. Verfahren zur Herstellung der Piperidylgruppen enthaltenden Phosphazene der Formel (I) in Anspruch 1, dadurch gekennzeichnet, dass man ein oligomeres oder polymeres Halogenphosphazen der Formel (Ia)

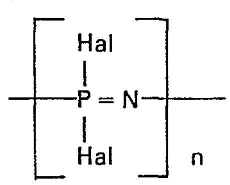

(Ia),

in der n = 3 bis 100 und Hal = Cl, Br, J oder F bedeutet, mit solchen Verbindungen der Formeln (II), (III) oder (IV) aus Anspruch 1, in denen die freie Valenz durch Wasserstoff abgesättigt ist, und die mindestens einen Polyalkylpiperidylrest der Formel (V) enthalten müssen, in einem inerten organischen Lösungsmittel bei Anwesenheit eines Halogenwassertoffakzeptors im Temperaturbereich von 20 bis 200°C zur Reaktion bringt, wobei man entweder

a) sämtliche Halogenatome einer Verbindung (Ia) durch Umsetzen mit der äquivalenten Menge einer Verbindung der Formel H-(II), H-(III) oder H-(IV) substituiert, oder

b) eine Verbindung (Ia) mit weniger als der äquivalenten, jedoch mindestens der äquimolaren Menge einer Verbindung der Formel H-(II), H-(III) oder H-(IV) in noch Halogenatome enthaltende Teilsubstitutionsprodukte überführt, und, falls gewünscht, diese mit der, bezogen auf den Resthalogengehalt, äquivalenten Menge einer weiteren Verbindung der Formel H-(II), H-(III) oder H-(IV) umsetzt.

3. Verwendung der Verbindungen nach Anspruch 1 zum Stabilisieren von synthetischen Polymeren.

4. Verwendung nach Anspruch 3, dadurch gekennzeichnet, dass das Polymere ein Polyolefin ist.

5. Verwendung nach Anspruch 3, dadurch gekennzeichnet, dass das Polymere ein Polyacrylat, ein Polymethacrylat oder ein Homo- oder Copolymerisat des Styrols ist.

6. Verfahren zum Stabilisieren von synthetischen Polymeren gegen den schädigenden Einfluss von Licht, dadurch gekennzeichnet, dass man den Polymeren, gegebenenfalls neben bisher bekannten, stabilisierend wirkenden Stoffen, 0,01 bis 5 Gewichtsteile, bezogen auf Polymeres, einer Verbindung nach Anspruch 1 zusetzt.

7. Gegen UV-Zersetzung stabilisierte, synthetische Polymere, in denen 0,01 bis 5 Gewichtsteile, bezogen auf Polymeres, einer Verbindung nach Anspruch 1 enthalten sind.

## Claims

1. A phosphazene, substituted by piperidyl groups, of the formula (I)

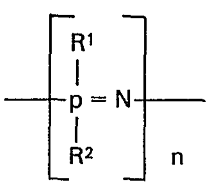

(I),

in which n is an integer from 3 to 100, $R^1$ and $R^2$ are identical or different and represent a group of the formulae (II), (III) or (IV)

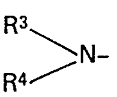

(II),

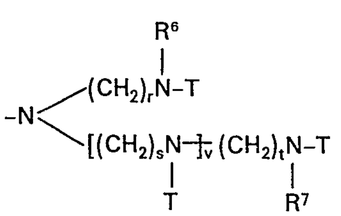

(III)

$-O-R^5$ (IV)

or represent in addition to at least one of these groups, halogen, and in the formula (II) $R^3$ and $R^4$ are identical or different and denote hydrogen, $C_1$- to $C_{18}$-alkyl, $C_5$- to $C_{12}$-cycloalkyl, phenyl, which can be substituted by Cl, $CH_3O$- or $C_1$- to $C_4$-alkyl, or $C_7$- to $C_9$-phenylalkyl or they denote a group of the formula (V)

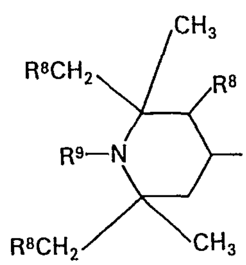

(V),

in which $R^8$ denotes hydrogen or methyl and $R^9$ denotes hydrogen, $C_1$- to $C_4$-alkyl which can be substituted by up to two OH groups, 2, 3-epoxypropyl, allyl or benzyl, $R^3$ additionally denotes $C_3$- to $C_{21}$-alkoxyalkyl or $R^3$ and $R^4$ together with the N atom linking them represent a pyrrolidine ring or a piperidine, morpholine or hexamethyleneimine ring which can also be substituted by up to 4 $C_1$- to $C_4$-alkyl groups, and in the formula (III) r, s and t are identical or different integers from 2 to 6, v represents an integer from 0 to 3, and $R^6$ and $R^7$ represent identical or different radicals $R^5$ or represent a group of the formula (V) and T has the meaning of a group of the formula (VI)

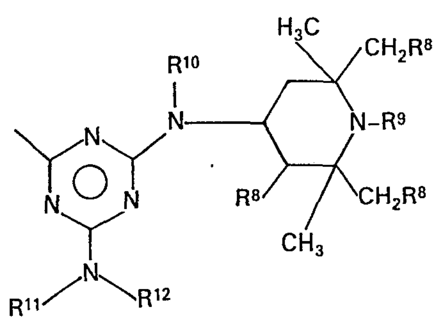

(VI),

in which $R^8$ and $R^9$ have the meanings indicated above, $R^{10}$ and $R^{11}$ are identical or different radicals having the meaning of $R^3$ and $R^{12}$ is a radical having the meaning of $R^4$, and in the formula (IV) $R^5$ represents a radical $R^4$ or a group of the formula (VII) or (VIII),

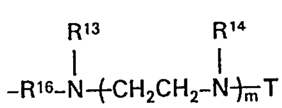

(VII)

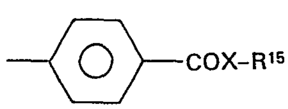

(VIII)

in which X denotes O or $NR^3$, with $R^3$ as indicated above and $R^{15}$ denotes $CH_3$, $C_2H_5$ or a group of the

formula (V), m denotes 0 or 1, T denotes a radical of the formula (VI), $R^{16}$ denotes $C_2$- to $C_6$-alkylene, $R^{13}$ denotes a radical $R^4$ or T and $R^{14}$ denotes a radical $R^4$ and the formula (I) must contain at least one group of the formula (V).

2. A process for preparing phosphazenes, containing piperidyl groups, of the formula (I) in claim 1, which process comprises reacting an oligomeric or polymeric halogenophosphazene of the formula (Ia)

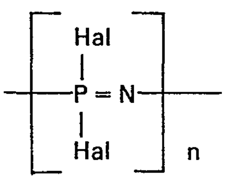

(Ia),

in which n denotes 3 to 100 and Hal denotes Cl, Br, I or F, with those compounds of the formulae (II), (III) or (IV) from claim 1 in which the free valency is saturated by hydrogen and which must contain at least one polyalkylpiperidyl radical of the formula (V), in an inert organic solvent in the presence of a hydrogen halide acceptor within the temperature range of 20 to 200°C, either by a) substituting all halogen atoms of a compound (Ia) by reaction with the equivalent amount of a compound of the formula H-(II), H-(III) or H-(IV) or b) converting a compound (Ia) with an amount of a compound of the formula H-(II), H-(III) or H-(IV) which is less than the equivalent but at least equimolar into partial substitution products still containing halogen atoms and, if desired, reacting the latter with the equivalent amount, relative to the residual halogen content, of a further compound of the formula H-(II), H-(III) or H-(IV).

3. The use of compounds as claimed in claim 1, for stabilizing synthetic polymers.

4. The use as claimed in claim 3, wherein the polymer is a polyolefin.

5. The use as claimed in claim 3, wherein the polymer is a polyacrylate, a polymethacrylate or a homo- or copolymer of styrene.

6. A process for stabilizing synthetic polymers against the damaging influence of light, which process comprises adding to the polymers, of appropriate in addition to hitherto known materials which have a stabilizing action, 0.01 to 5 parts by weight relative to the polymer, of a compound as claimed in claim 1.

7. A synthetic polymer stabilized against UV decomposition, which contains 0.01 to 5 parts by weight, relative to the polymer, of a compound as claimed in claim 1.

**Revendications**

1. Phosphazènes porteurs de radicaux pipéridyles qui répondent à la formule générale I:

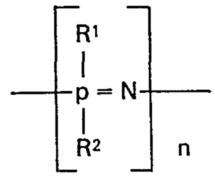

(I),

dans laquelle

n représente un nombre entier de 3 à 100 et

$R^1$ et $R^2$ représentent chacun, indépendamment l'un de l'autre, un radical répondant à l'une des formules II, III et IV:

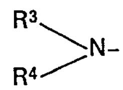

(II),

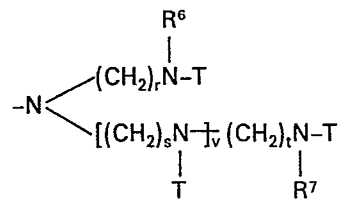

(III)

$-O-R^5$ (IV)

ou représentent un halogène à côté d'au moins un de ces radicaux,

dans la formule (II):

$R^3$ et $R^4$ représentent chacun, indépendamment l'un de l'autre, l'hydrogène, un alkyle en $C_1$–$C_{18}$, un cycloalkyle en $C_5$–$C_{12}$, un phényle éventuellement porteur d'un Cl, d'un $CH_3O$- ou d'un alkyle en $C_1$–$C_4$, un phénylalkyle en $C_7$–$C_9$, ou un radical répondant à la formule V:

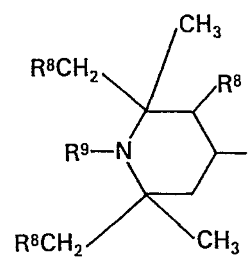

(V),

dans laquelle

$R^8$ représente l'hydrogène ou un méthyle et

$R^9$ représente l'hydrogène, un alkyle en $C_1$–$C_4$ éventuellement porteur d'un ou deux radicaux -OH, un époxy-2,3 propyle, un allyle ou un benzyle,

$R^3$ peut en outre représenter un radical alcoxyalkyle en $C_3$–$C_{21}$ ou encore

$R^3$ et $R^4$ peuvent former ensemble et avec l'atome d'azote qui les joint un cycle de pyrrolidine ou un cycle de pipéridine, de morpholine ou de perhydroazépine qui peut en outre porter jusqu'à quatre radicaux alkyles en $C_1$–$C_4$,

dans la formule III:

r, s et t représentent des nombres entiers de 2 à 6, égaux ou différents,

v représente un nombre entier de 0 à 3,
$R^6$ et $R^7$ représentent chacun, indépendamment l'un de l'autre, un radical $R^5$ ou un radical de formule V, et
T représente un radical répondant à la formule VI:

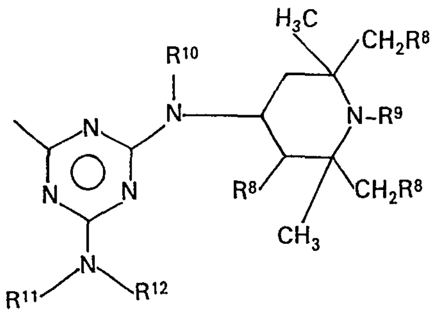

(VI),

dans laquelle
$R^8$ et $R^9$ ont les significations qui ont été précédemment données,
$R^{10}$ et $R^{11}$ représentent des radicaux $R^3$ identiques ou différents, et
$R^{12}$ représente un radical $R^4$,
dans la formule IV:

$R^5$ représente un radical $R^4$ ou un radical répondant à l'une des formules VII et VIII:

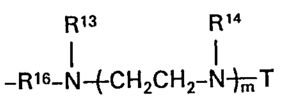

(VII)

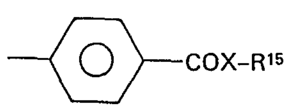

(VIII)

dans lesquelles:
X représente O ou $NR^3$, le symbole $R^3$ ayant la signification indiquée ci-dessus,
$R^{15}$ représente $CH_3$, $C_2H_5$ ou un radical de formule V,
m représente le nombre zéro ou le nombre 1,
T représente un radical de formule VI,
$R^{16}$ représente un radical alkylène contenant de 2 à 6 atomes de carbone,
$R^{13}$ représente un radical $R^4$ ou T et
$R^{14}$ représente un radical $R^4$,
et, dans la formule I, il doit y avoir au moins un radical de formule V.

2. Procédé de préparation des phosphazènes contenant des radicaux pipéridyles et répondant à la formule I, selon la revendication 1, procédé caractérisé en ce qu'on fait réagir des halogénophosphazènes oligomères ou polymères répondant à la formule Ia

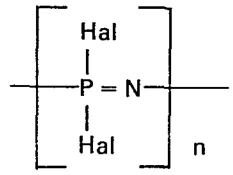

(Ia),

dans laquelle n représente un nombre de 3 à 100 et Hal représente Cl, Br, I ou F, avec des composés qui répondent aux formules II, III et/ou IV définies à la revendication 1 dans lesquelles la valence libre est saturée par de l'hydrogène, et qui doivent contenir au moins un radical polyalkylpipéridyle de formule V, dans un solvant organique inerte, en présence d'un accepteur d'halogénure d'hydrogène, dans un intervalle de température allant de 20 à 200°C, et, ce faisant, ou bien:

a) on remplace tous les atomes d'halogènes d'un composé (Ia) par réaction avec la quantité équivalente d'un composé de formule H-(II), H-(III) ou H-(IV), ou bien
b) on transforme un composé (Ia), par réaction avec une quantité d'un composé de formule H-(II), H-(III) ou H-(IV) inférieure à la quantité équivalente mais au moins égale à la quantité équimolaire, en produits de substitution partielle contenant encore des atomes d'halogènes, et, si on le désire, on fait réagir ceux-ci avec la quantité équivalente, par rapport à la teneur résiduelle en halogènes, d'un autre composé de formule H-(II), H-(III) ou H-(IV).

3. Application des composés selon la revendication 1 à la stabilisation de polymères synthétiques.

4. Application selon la revendication 3 caractérisée en ce que le polymère est une polyoléfine.

5. Application selon la revendication 3 caractérisée en ce que le polymère est un polyacrylate, un polyméthacrylate ou un homopolymère ou copolymère du styrène.

6. Procédé pour stabiliser des polymères synthétiques contre les effets destructeurs de la lumière, procédé caractérisé en ce qu'on ajoute aux polymères, éventuellement en plus de substances stabilisantes connues de 0,01 à 5% en poids, par rapport au polymère, d'un composé selon la revendication 1.

7. Polymères synthétiques stabilisés contre la dégradation par les rayons ultraviolets, polymères caractérisés en ce qu'ils contiennent de 0,01 à 5% en poids, par rapport au polymère, d'un composé selon la revendication 1.